# EUROPÄISCHE PATENTSCHRIFT

(11) **EP 0 775 618 B1**
(45) Veröffentlichungstag und Bekanntmachung des Hinweises auf die Patenterteilung: **07.02.2001**
(21) Anmeldenummer: 96111006.1
(22) Anmeldetag: 09.07.1996
(51) Int. Cl.: B60T 8/40, B60T 8/42, B60T 8/48, F01C 1/10, F04C 3/08

(54) **Hydraulische Fahrzeugbremsanlage mit Radschlupfregeleinrichtung**
Hydraulic brake system for vehicles with wheel slip control device
Système de freinage hydraulique pour véhicules avec dispositif de contrôle de patinage

(30) Priorität: 25.11.1995 DE 19543962
(43) Veröffentlichungstag der Anmeldung: 28.05.1997
(73) Patentinhaber: ROBERT BOSCH GMBH, 70442 Stuttgart (DE)
(72) Erfinder: Jonner, Wolf-Dieter, Dipl.-Ing., 71717 Beilstein Schmidhausen (DE); Pueschel, Helmut, Dipl.-Ing., 71672 Marbach (DE); Isella, Thomas, Dipl.-Ing., 71706 Markgrönigen (DE); Willmann, Karl-Heinz, Dipl.-Ing., 71691 Freiberg (DE); Hummel, Rolf, Dipl.-Ing., 71144 Steinenbronn (DE); Mueller, Elmar, Dipl.-Ing., 71706 Markgröningen (DE); Herr, Johann, 71665 Vaihingen (DE); Holzmann, Roland, Dipl.-Ing. (FH), 71696 Möglingen (DE); Dzierzawa, Guenter, Dipl.-Ing. (FH), 71334 Waiblingen (DE); Moehle, Martin, Dipl.-Ing., 71711 Steinheim (DE); Herderich, Hans-Jürgen, Dipl.-Ing., 71394 Kernen (DE)

(56) Entgegenhaltungen:
- EP-A- 0 482 367
- DE-A- 2 554 105
- DE-A- 2 922 921

## Beschreibung

### Stand der Technik

Die Erfindung betrifft eine hydraulische Fahrzeugbremsanlage mit Radschlupfregeleinrichtung nach der Gattung des Hauptanspruchs.

Durch die EP 0 482 367 A1 ist eine hydraulische Fahrzeugbremsanlage bekannt, deren zwischen einem zweikreisigen Hauptbremszylinder und Radbremsen von vier Fahrzeugrädern angeordnete Radschlupfregeleinrichtung für den Bremsbetrieb mittels des Hauptbremszylinders durch Betätigung des Bremspedals je Bremskreis eine sogenannte Rückförderpumpe, die Hochdruck erzeugen kann, und den Radbremsen zugeordnete elektrisch steuerbare Wegeventilanordnungen hat, wobei mittels der Wegeventilanordnungen jeweils Radbremsen von blockiergefährdeten Rädern vorübergehend vom Hauptbremszylinder trennbar und mit der zugeordneten Rückförderpumpe verbindbar sind, so daß diese Rückförderpumpe Druckmittel von der jeweiligen Radbremse weg und in den Hauptbremszylinder zurückfördert. Die Fahrzeugbremsanlage ist auch weitergebildet zur Begrenzung von Antriebsschlupf von antreibbaren Rädern auf einen günstigen Schlupfwertebereich durch automatische Bremsdruckerzeugung in wenigstens einer Radbremse von deren angetriebenen Rädern. Hierfür dient eine der Rückförderpumpen als Mittel zur Erzeugung von Hochdruck, der bedingungsabhängig mittels wenigstens einer der Wegeventilanordnungen in teilweiser oder ganzer Höhe der wenigstens einen Radbremse zugeleitet wird zum Verändern von Antriebsschlupf durch Kompensation von Antriebsmomentüberschuß. Für diesen automatischen Bremsbetrieb hat die Fahrzeugbremsanlage noch ein Pumpenaggregat, welches eine im wesentlichen leckstromfreie oder leckstromarme Niederdruckpumpe in Form einer Zahnradpumpe, ein Druckbegrenzungsventil in einer zwischen einem Ausgang und einem Eingang der Zahnradpumpe liegenden ersten Bypassleitung und eine Drossel in einer der ersten Bypassleitung parallelgeschalteten zweiten Bypassleitung und einem Motor zum Antreiben der Niederdruckpumpe hat. Beispielsweise ist die Zahnradpumpe mit einem Innenzahnring ausgestattet und unter dem Namen "Gerotor-Pumpe" bei der Firma W. H. Nichols Company zu kaufen. Diese Niederdruckpumpe versorgt mit aus einem Vorratsbehälter angesaugtem Druckmittel durch ein Rückschlagventil die Rückförderpumpe für den Antriebsschlupfregelbetrieb und dient durch ein weiteres Rückschlagventil hindurch zum Anlegen von Bremsbelägen der wenigstens einen Radbremse an deren Bremsscheibe oder Bremstrommel am Beginn eines Antriebsschlupfregelbetriebs. Die Drossel und der zweite Bypass dienen dazu, beim Entlüften der komplett montierten hydraulischen Fahrzeugbremsanlage vor dem Einfüllen von Druckmittel eine von dem Ausgang der Niederdruckpumpe und sich zu den genannten Rückschlagventilen verzweigende Verbindungsleitung zu evakuieren und nachfolgend durch den Vorratsbehälter hindurch mit Druckmittel zu füllen. Dadurch wird erreicht, daß die Niederdruckpumpe bei Inbetriebnahme der Fahrzeugbremsanlage keine Luft in die Fahrzeugbremsanlage drückt, was bekanntlich die Wirksamkeit der Bremsanlage nachteilig mindern kann. Die Anordnung der beiden Bypässe, des Druckbegrenzungsventils und der separat ausgebildeten Drossel ist teuer, beansprucht Bauraum und erhöht das Gewicht der Fahrzeugbremsanlage.

Durch die DE 42 26 646 A1 ist eine weitere hydraulische Fahrzeugbremsanlage bekannt mit einer Radschlupfregeleinrichtung zwischen einem Hauptbremszylinder und Radbremsen von Fahrzeugrädern und mit einem Pumpenaggregat, das zum automatischen Bremsen Rückförderpumpen der Radschlupfregeleinrichtung versorgt. Diese Fahrzeugbremsanlage ist zusätzlich zur Regelung bzw. Begrenzung von Antriebsschlupf durch radindividuelles Bremsen auch noch eingerichtet zum Erzeugen von Giermomenten oder/und Erzeugen oder Verändern von Seitenschlupf von Fahrzeugrädern zum automatischen Verbessern des Fahrverhaltens eines dieserart ausgerüsteten Kraftfahrzeugs zur Unterstützung des Fahrers bei Kurvenfahrten bis zur Grenze des physikalisch möglichen. Dabei ist das Pumpenaggregat beispielsweise ausgebildet in der in der EP 0 482 367 A1 offenbarten Weise. Unterschiedlich ist, daß im Beispiel der DE 42 26 446 A1 das Pumpenaggregat beide Rückförderpumpen mit Druckmittel für automatisches Bremsen versorgt, so daß alle den beiden Bremskreisen zugeordneten Fahrzeugräder bedingungsabhängig und voneinander unabhängig automatisch bremsbar sind. Die DE 42 26 446 A1 offenbart unterschiedliche Bremskreisausbildungen und unterschiedliche Zuordnungen von Vorderradbremsen und Hinterradbremsen zu den Bremskreisen.

Eine durch die DE 42 32 311 C1 bekannte hydraulische Fahrzeugbremsanlage besitzt ebenfalls einen Hauptbremszylinder, eine Radschlupfregeleinrichtung, ein Pumpenaggregat und Radbremsen und weist zusätzlich an das Pumpenaggregat angeschlossen zwischen dem Hauptbremszylinder und der Radschlupfregeleinrichtung in jedem Bremskreis eine Zylinderanordnung mit einem Trennkolben auf. Die Zylinderanordnungen mit ihren Trennkolben haben die Aufgabe, von dem Pumpenaggregat erzeugten Druck in die Radschlupfregeleinrichtung einzuleiten und dabei das Hineindrücken von gegebenenfalls von dem Pumpenaggregat angesaugter Umgebungsluft zu verhindern. Demgemäß wird lediglich Inhalt der Zylinderanordnungen zu der Radschlupfregeleinrichtung verdrängt. Eine Teilmenge des verdrängten Druckmittels gelangt beim Beginn eines automatischen Bremsbetriebs in wenigstens eine der Radbremsen zum Bremsbelaganlegen, und eine andere Teilmenge wird der jeweiligen Rückförderpumpe zur Bremsdruckerzeugung zugeführt. Das Pumpenaggregat entspricht ebenfalls einer durch die DE 42 26 646 A1 bekannten Bauweise mit dem teuren Druckbegrenzungsventil. Die Zylinderanordnungen mit den Trennkolben verteuern die hydraulische Bremsanlage zusätzlich.

### Vorteile der Erfindung

Die Fahrzeugbremsanlage mit den kennzeichnenden Merkmalen des Anspruchs 1 hat den Vorteil, den Aufwand für die vorbekannte Anordnung von zwei Bypassleitungen und für das in die eine Bypassleitung eingebaute Druckbegrenzungsventil und für die in die andere Bypassleitung eingebaute Drossel zu vermeiden.

Durch die in den Unteransprüchen aufgeführten Maßnahmen sind weitere vorteilhafte Weiterbildungen und Verbesserungen der im Anspruch 1 angegebenen hydraulischen Fahrzeugbremsanlage möglich.

Die kennzeichnenden Merkmale des Anspruchs 2 geben ein Ausführungsbeispiel an für die Gattung "Zahnradpumpen". Die kennzeichnenden Merkmale des Anspruchs 3 geben konkret ein Ausführungsbeispiel an für eine sogenannte Innenzahnringpumpe, die auch unter dem Namen Gerotor-Pumpe bekannt ist.

Die kennzeichnenden Merkmale des Anspruchs 4 ergeben eine preisgünstige Bauausführung des Pumpenaggregates, weil in preisgünstiger Weise der Gehäusedeckel zusätzlich der Aufgabe der Vereinigung der Niederdruckpumpe mit ihrem Motor dient.

Die kennzeichnenden Merkmale der weiteren Unteransprüche geben Auswahlmöglichkeiten an zur Gestaltung von Radschlupfregeleinrichtungen, die zum automatischen Bremsbetrieb von wenigstens einer der erfindungswesentlich ausgebildeten Niederdruckpumpen mit Druckmittel versorgbar sind. Erkennbar ist also die erfindungswesentliche Ausbildung einer Niederdruckpumpe kombinierbar mit bereits bekannten Radschlupfregeleinrichtungen und auch mit Radschlupfregeleinrichtungen, die von den bekannten abweichende Ausgestaltungen aufweisen.

### Zeichnung

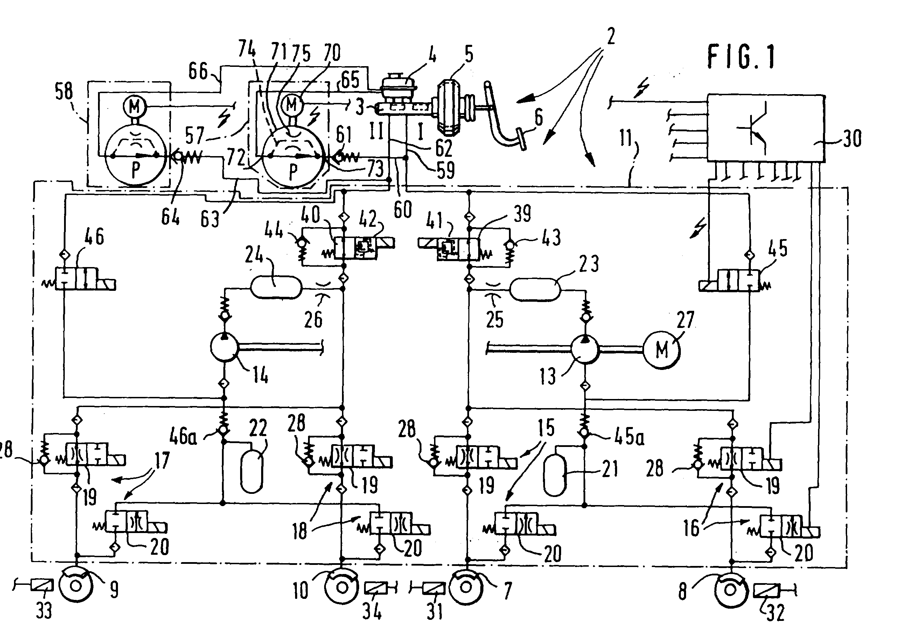

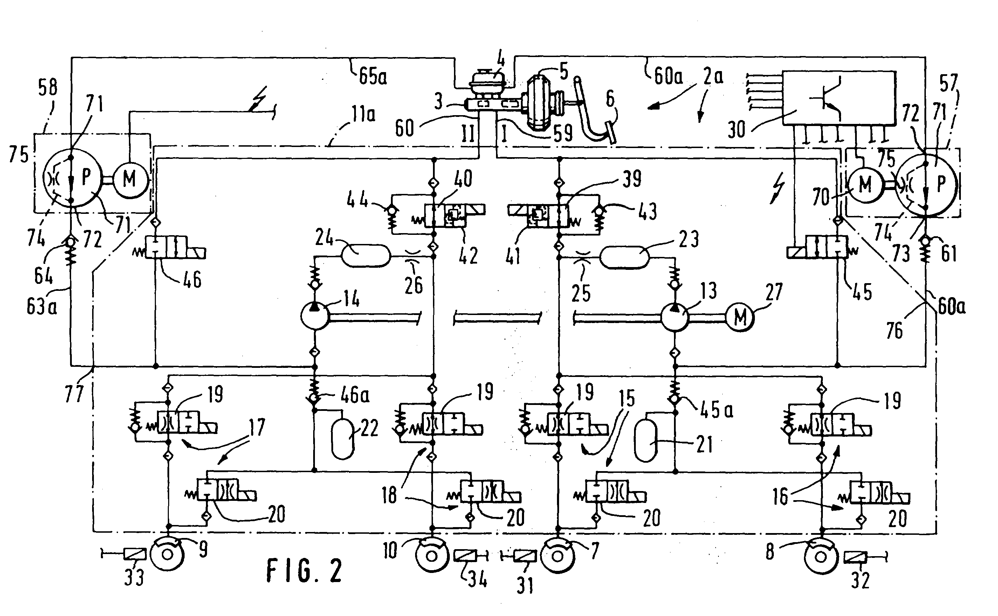

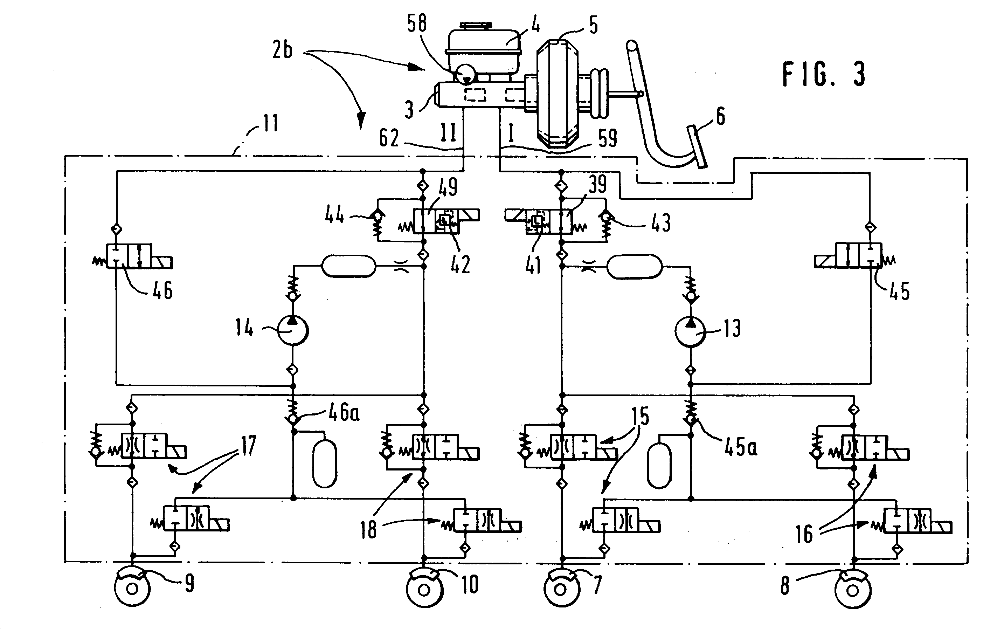

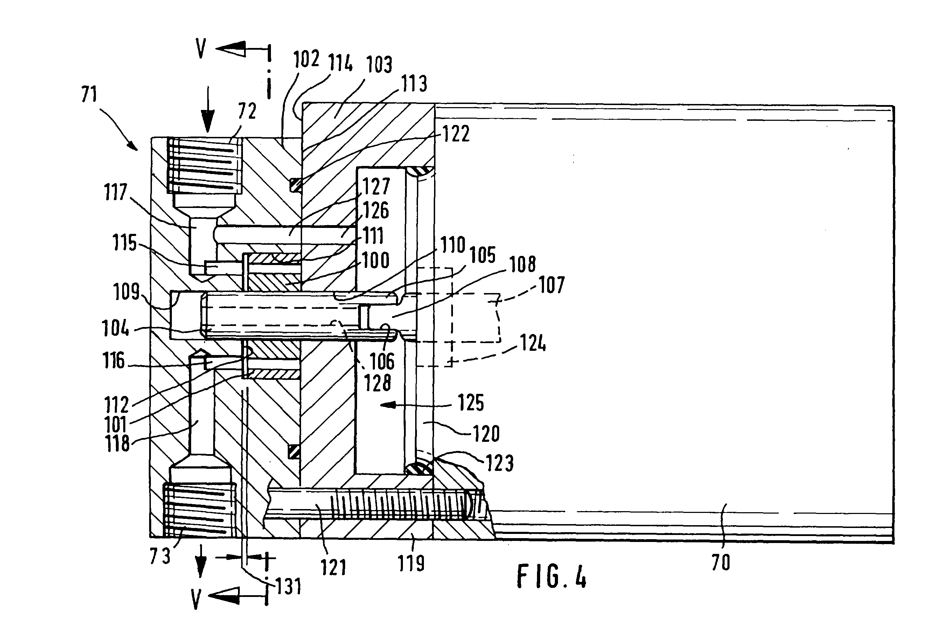

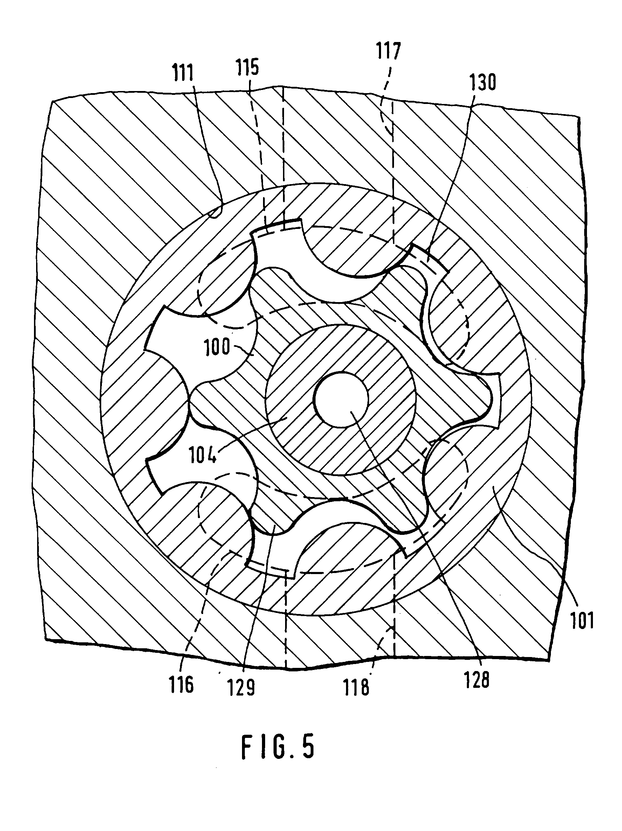

Die Erfindung ist nachfolgend anhand einer Zeichnung beschrieben. Es zeigen die Figur 1 einen Schaltplan eines ersten Ausführungsbeispiels der hydraulischen Fahrzeugbremsanlage mit wenigstens einem erfindungsgemäßen Pumpenaggregat, die Figur 2 einen Schaltplan eines zweiten Ausführungsbeispiels einer hydraulischen Fahrzeugbremsanlage mit wenigstens einem erfindungsgemäßen Pumpenaggregat, die Figur 3 ein drittes Ausführungsbeispiel einer hydraulischen Fahrzeugbremsanlage mit einem erfindungsgemäßen Pumpenaggregat, die Figur 4 einen Längsschnitt durch das erfindungsgemäße Pumpenaggregat und Figur 5 einen Querschnitt durch das erfindungsgemäße Pumpenaggregat der Figur 4.

### Beschreibung der Ausführungsbeispiele

Das erste Ausführungsbeispiel der hydraulischen Fahrzeugbremsanlage 2 gemäß der Figur 1 besitzt einen zweikreisigen Hauptbremszylinder 3 mit einem Vorratsbehälter 4, mit beispielsweise einem pneumatischen Bremskraftverstärker 5 und mit einem Bremspedal 6, zwei Bremskreise I und II, dem Bremskreis I zugeordnete Radbremsen 7 und 8, dem Bremskreis II zugeordnete Radbremsen 9 und 10, und eine zwischen dem Hauptbremszylinder 3 und den Radbremsen 7 bis 10 angeordnete Radschlupfregeleinrichtung 11.

Der Hauptbremszylinder 3 ist beispielsweise in an sich bekannter Weise aufgebaut und unter Zuhilfenahme des Bremspedals 6 betätigbar, so daß in den Bremskreisen I und II Bremsdrücke entstehen. Die mittels des Bremspedals 6 auf den Hauptbremszylinder 3 ausübbare Wirkung ist mittels des Bremskraftverstärkers 5 verstärkbar. Der Vorratsbehälter 4 versorgt den Hauptbremszylinder 3 mit Druckmittel, das vom Hauptbremszylinder 3 aus in Richtung zu den Radbremsen 7 bis 10 durch die Radschlupfregeleinrichtung 11 hindurch drückbar ist für einen normalen Bremsbetrieb.

Die Radschlupfregeleinrichtung 11 ist für die Begrenzung von Radschlupf bei Betätigung des Bremspedals 6 ausgebildet als sogenannter Rückfördertyp und besitzt für den Bremskreis I eine Rückförderpumpe 13 und für den Bremskreis II eine Rückförderpumpe 14. Ferner besitzt die Radschlupfregeleinrichtung 11 für jede der Radbremsen 7 bis 10 eine eigene Bremsdruckmodulationsventilanordnung 15, 16, 17 bzw. 18, beispielsweise bestehend aus jeweils einem Bremsdruckaufbauventil 19 und einem jeweiligen Bremsdruckabsenkventil 20, sowie für jeden Bremskreis I und II eine Speicherkammer 21 bzw. 22. Des weiteren sind beispielsweise eine erste Dämpferkammer 23 für den Bremskreis I und eine zweite Dämpferkammer 24 für den Bremskreis II sowie eine Dämpferdrossel 25 bzw. Dämpferdrossel 26 vorgesehen. Ein Motor 27 ist als Antrieb den Rückförderpumpen 13 und 14 zugeordnet. Ausgehend von den Radbremsen 7 bis 10 sind deren jeweils zugeordnete Bremsdruckaufbauventile 19 in Richtung zum Hauptbremszylinder 3 umgehbar mittels Rückschlagventilen 28, die in Richtung zum Hauptbremszylinder 3 hin offenbar sind bei einem Druckgefälle über dem jeweiligen Bremsdruckaufbauventil 19, beispielsweise wenn dieses in seine Sperrstellung gesteuert ist oder wenn in seiner normalen Offenstellung eine zugeordnete Drossel wirksam ist.

Anläßlich einer Betätigung des Bremspedals 6 und deshalb den Radbremsen 7 bis 10 zugeführtem Bremsdruck ist Radschlupfregelbetrieb möglich mittels der genannten Einzelelemente der Radschlupfregeleinrichtung 11. Hierzu befinden sich die normalerweise in der Offenstellung befindlichen Bremsdruckaufbauventile 19 zwischen den jeweiligen Radbremsen 7 bis 10 und dem Hauptbremszylinder 3, so daß durch Betätigung des Bremspedals 5 im Hauptbremszylinder 3 erzeugter Druck normalerweise in die Radbremsen 7 bis 10 gelangen kann. Jeweils ebenfalls mit den Radbremsen 7 bis 10 verbundene Bremsdruckabsenkventile 20 der Bremsdruckmodulationsventilanordnungen 15 und 16 bzw. 17 und 18 sind in der Normalstellung geschlossen und ermöglichen in gesteuerter Stellung einen drosselnden Durchlaß und sind mit der Rückförderpumpe 13 des Bremskreises I eingangsseitig bzw. mit der Rückförderpumpe 14 des Bremskreises II eingangsseitig verbunden. Ausgangsseitig an die Rückförderpumpen 13, 14 schließen sich die Dämpfer 23, 24 an. In Richtung zum Hauptbremszylinder 3 sowie zu den jeweiligen Bremsdruckaufbauventilen 19 folgen auf die Dämpferkammern 23, 24 die Drosseln 25, 26.

Zur Radschlupfregeleinrichtung 11 gehört noch ein Steuergerät 30 sowie den nicht dargestellten Rädern, die mittels der Radbremsen 7 bis 10 bremsbar sind, zugeordnete Raddrehungssensoren 31 bis 34. Das Steuergerät 30 ist an diese Raddrehungssensoren 31 bis 34 angeschlossen. An das Steuergerät 30 seinerseits sind zum einen die einzelnen Ventile 19, 20 der Bremsdruckmodulationsventilanordnungen 15 bis 18 angeschlossen und andererseits der Motor 27.

Wird beispielsweise auf gleichmäßig griffiger Fahrbahn das Bremspedal 6 zunehmend stärker betätigt, so verändern sich die Folgen von aus den Raddrehungssensoren 31 bis 34 abgegebenen Signalen in einer Weise, die das Steuergerät 30 schließlich als anwachsenden Bremsschlupf mit bevorstehender Radblockiergefahr deutet. Angenommen, es tritt die Radblockiergefahr gleichzeitig an allen Rädern gleich stark auf, so schaltet das Steuergerät 30 den Motor 27 und damit die Rückförderpumpen 13 und 14 ein, schließt alle Bremsdruckaufbauventile 19 der Bremsdruckmodulationsventilanordnungen 15 bis 18 und öffnet alle zugeordneten Bremsdruckabsenkventile 20. Dies hat zur Folge, daß im Hauptbremszylinder 3 gegebenenfalls noch ansteigender Druck nicht in die Radbremsen 7 bis 10 gelangt, sondern daß aus diesen Radbremsen 7 bis 10 Druckmittelmengen abströmen zu den Speicherkammern 21 bzw. 22 mit der Folge der Verminderung oder Beseitigung der Radblockiergefahr. Aus den Speicherkammern 21 bzw. 22 fließen dann Druckmittelmengen in die Rückförderpumpen 13 bzw. 14 ein. Infolgedessen drücken diese Rückförderpumpen 13 und 14 Druckmittel durch die Dämpferkammern 23 bzw. 24 und die Drosseln 25 und 26 und durch die beiden Bremskreise I und II zurück zum Hauptbremszylinder 3. Nach Beenden von Radblockiergefahr, es sei hier angenommen, daß zufälligerweise die Radblockiergefahr an allen Rädern 7 bis 10 gleichzeitig verschwindet, werden die Bremsdruckmodulationsventilanordnungen 15 bis 18 in ihre Grundstellungen verbracht, indem das Steuergerät 30 die Zufuhr von für das Bremsdruckabsenken notwendigen Steuerströmen beendet. Tritt beispielsweise während einer darauffolgenden vorgewählten Zeitspanne keine Radblockiergefahr mehr auf, dann beendet das Steuergerät 30 auch die Stromzufuhr zum Motor 27.

Beispielsweise ist das Steuergerät 30 auch so eingerichtet, daß bei unterschiedlicher Radblockiergefahr an den Rädern Drücke in den Radbremsen 7 bis 10 individuell und unabhängig voneinander veränderbar sind.

Zum automatischen Bremsen besitzt die Radschlupfregeleinrichtung 11 noch ein Umschaltventil 39 bzw. 40, ein Druckbegrenzungsventil 41 bzw. 42 und ein Rückschlagventil 43 bzw. 44. Des weiteren sind den Rückförderpumpen 13 bzw. 14 eingangsseitig noch 2/2-Wegeventile 45 und 46 sowie Rückschlagventile 45a und 46a zugeordnet. Zur Versorgung der Radschlupfregeleinrichtung 11 für automatischen Bremsbetrieb ist wenigstens ein Pumpenaggregat 57 bzw. 58 vorgesehen. Dabei ist das Pumpenaggregat 57 dem Bremskreis I zugeordnet. Zu diesem Zweck verläuft von dem Pumpenaggregat 57 zu einer Hauptbremsleitung 59, die sich zwischen dem Hauptbremszylinder 3 und der Radschlupfregeleinrichtung 11 befindet, eine Einspeiseleitung 60, in die ein zur Hauptbremsleitung 59 hin öffenbares Rückschlagventil 61 eingebaut ist. Ist das zweite Pumpenaggregat 58 eingebaut, so befindet sich zwischen einer dem Bremskreis II zugeordneten Hauptbremsleitung 62, die ebenfalls sich zwischen dem Hauptbremszylinder 3 und der Radschlupfregeleinrichtung 11 befindet, eine weitere Einspeiseleitung 63, in die ein ebenfalls und diesmal zur Hauptbremsleitung 62 hin öffenbares Rückschlagventil 64 eingebaut ist.

Das Pumpenaggregat 57 ist mittels einer Saugleitung 65 an den Vorratsbehälter 4 angeschlossen, und das Pumpenaggregat 58 ist mittels einer weiteren Saugleitung 66 ebenfalls an den Vorratsbehälter 4 angeschlossen. Die Pumpenaggregate 57 und 58 sind identisch ausgebildet.

Lediglich ein Pumpenaggregat 57 wird vorgesehen, wenn die Radbremsen 7 und 8 des Bremskreises I Vorderradbremsen sind von einem Kraftfahrzeug, dessen Vorderräder antreibbar sind oder/und dessen Vorderräder beim Durchfahren von Kurven weniger zum seitlichen Driften neigen als Hinterräder dieses Kraftfahrzeugs. Im Falle der angetriebenen Vorderräder ist automatisches Bremsen wenigstens eines Vorderrades zur Begrenzung von Antriebsschlupf vorgesehen. Im Fall, daß die Vorderräder weniger zum seitlichen Driften neigen als Hinterräder und deshalb eine Drehbeschleunigung des Fahrzeugs um seinen Schwerpunkt eintreten kann, also ein Übersteuern oder Schleudern stattfinden kann, wird ebenfalls automatisch gebremst, wodurch der Seitenschlupf der Vorderräder vergrößert und damit der Übersteuerungstendenz bzw. dem Schleudern entgegengewirkt wird.

Erkennt das Steuergerät 30 beispielsweise aufgrund von Signalfolgen aus den Raddrehungssensoren 31 bis 34, daß automatisches Bremsen wenigstens eines der den Radbremsen 7 und 8 zugeordneten Räder zu bremsen ist, so schaltet das Steuergerät 30 das wenigstens eine Pumpenaggregat 57 ein, so daß dieses durch das gleichzeitig von dem Steuergerät 30 elektrisch geöffnete 2/2-Wegeventil 45 hindurch die Rückförderpumpe 13 mit Druckmittel versorgt, so daß diese Rückförderpumpe 13 bei einer Umschaltung des Umschaltventils 39 auf den Betrieb als Druckbegrenzungsventil 41 Druck für die wenigstens eine Radbremse 7 bzw. 8 zur Verfügung stellt. Hierbei kann das Pumpenaggregat 57 einerseits für eine gute Füllung der Rückförderpumpe 13 sorgen, so daß die Förderleistung der Rückförderpumpe 13 nahe an die theoretische Förderleistung heranreicht. Gleichzeitig wird auch durch das das Umschaltventil 39 überbrückende Rückschlagventil 43 der wenigstens einen Radbremse 7 bzw. 8 ein Druck zur Verfügung gestellt zum Anlegen von Bremsbacken. Damit ist in an sich bekannter Weise ein schnelles Anlegen von Bremsbacken und ein schneller Anstieg von Bremskraft erreichbar.

Liegt der Fall vor, daß beispielsweise die Radbremsen 7 und 8 des Bremskreises I zu Vorderrädern eines Fahrzeugs gehören, die antreibbar sind, und daß dieses Fahrzeug zum Untersteuern, also zum Ausbrechen mit den Vorderrädern aus der Kurve neigt, so ist, wie dies in der Figur 1 gezeichnet ist, der Bremskreis II für Hinterradbremsen 8 und 10 bestimmt, und diesem Bremskreis II ist das Pumpenaggregat 58, das Umschaltventil 40 mit dem integrierten Druckbegrenzungsventil 42, das Rückschlagventil 44 und das 2/2-Wegeventil 46 zugeordnet. Erkennbar wird dadurch in der bereits für den Bremskreis I beschriebenen Weise auch im Bremskreis II eine automatische Bremsdruckerzeugung möglich, wobei wiederum ein schnelles Bremsbackenanlegen und eine zügige Bremsdrucksteigerung möglich sind. Mittels eines dadurch erreichbaren Bremsens von Hinterrädern wird erreicht, daß diese verstärkt aus der Kurve driften und damit einer Drehung des Fahrzeugs im Sinne "aus der Kurve heraus" entgegenwirken. Eingangs wurde darauf hingewiesen, daß durch Bremsen einzelner Räder auch Giermomente erzeugbar sind, die im Sinne einer Lenkunterstützung beim Einleiten oder Ausleiten von Kurvenfahrten dienen können. Demgemäß wird das Steuergerät 30 in der Lage sein, Radbremsen individuell seitenweise mit Bremsdruck zu versorgen im Sinne eines sogenannten Lenkbremsens, das beispielsweise bekannt ist bei geländegängigen Fahrzeugen wie Ackerschleppern, die für linke und rechte Bremsen jeweils besondere Bremspedale aufweisen.

Ein Merkmal der Erfindung besteht darin, daß das wenigstens eine Pumpenaggregat 57 bzw. 58 Druckmittel für den automatischen Bremsbetrieb in die Hauptbremsleitung 59 bzw. 62 drückt. Wie bereits beschrieben, erhalten dadurch die Rückförderpumpen 13 und 14 Druckmittel zum Erreichen einer guten Förderleistung. Da andererseits der Hauptbremszylinder 3 in an sich bekannter Weise ausgebildet ist, bestehen bei nicht betätigtem Bremspedal 6 hydraulische Verbindungen zum Vorratsbehälter 4, so daß das jeweilige Pumpenaggregat 57 bzw. 58 Druckmittel in den Vorratsbehälter 4 fördert, aus dem zuvor das Druckmittel abgesaugt hat. Da die erwähnten hydraulischen Verbindungen fallweise sogenannte Schnüffelöffnungen, die normal offen sind, oder Zentralventile, die normal offen sind, aufweisen und daher mit Durchflußwiderständen behaftet sind, staut sich in den Hauptbremsleitungen 59 bzw. 62 Druck an, der insbesondere bei winterlichen Temperaturen und der dadurch bedingten Zähflüssigkeit des Druckmittels einen ausreichenden Versorgungsdruck zum Füllen der Rückförderpumpen 13 bzw. 14 zur Verfügung stellt. Wenn der angestaute Druck auch bei niedriger Viskosität als Folge von sommerlichen Temperaturen des Druckmittels zum Füllen der Rückförderpumpen 13 bzw. 14 ausreicht, können diese als sogenannte Freikolbenpumpen ausgebildet sein. Anderenfalls sind die Rückförderpumpen als selbstansaugende Pumpen ausgebildet.

Das Pumpenaggregat 57 besteht aus einem Motor 70 und einer von ihm antreibbaren Niederdruckpumpe 71, die symbolisch dargestellt ist und an die Saugleitung 65 angeschlossen einen Eingang 72 und einen mit dem Rückschlagventil 61 verbundenen Ausgang 73 und erfindungsgemäß wenigstens einen den Ausgang 73 mit dem Eingang 72 verbindenden Rückströmkanal 74 besitzt, der erfindungsgemäß so gestaltet ist, daß er bei einem Druckunterschied zwischen dem Ausgang 73 und dem Eingang 72 als eine Rückströmungen steuernde Drossel 75 wirkt. In der Figur 1 ist deshalb das allgemein übliche Symbol einer Pumpe gemäß DIN ISO 1219 ergänzt durch eine gestrichelte Linie, die gemäß DIN ISO 1219 für Abflußleitungen und Leckleitungen verwendet wird. Dieser gestrichelten Linie ist das Symbol einer Drossel gemäß DIN ISO 1219 zugeordnet. Die technische Ausführung ist nachfolgend anhand der Figuren 4 und 5 beschrieben.

Die Niederdruckpumpe 71 gehört beispielsweise zu der eingangs erwähnten Gattung "Gerotor-Pumpe" und hat infolge der Verbindung des Ausgangs 73 durch die Drossel 75 mit dem Eingang 72 die Eigenschaft, daß eine theoretische Fördermenge, die sich beim ungehinderten Abfluß von Druckmittel durch den Ausgang 73 einstellen könnte, nicht erreicht wird. Vielmehr ist die Drossel 75 so bemessen, daß bei der bereits früher erwähnten Viskosität des Druckmittels als Folge winterlicher Temperaturen bei eingeschaltetem Motor 70 durch die Drossel 75 hindurch eine solche Rückströmung entsteht, daß in der Hauptbremsleitung 59 lediglich ein Druck von beispielsweise 7 bar dann zustandekommt, wenn beispielsweise Druckmittel, das der Hauptbremsleitung 59 zugeführt wird, nicht in die Rückförderpumpe 13 und nicht durch eines der Bremsdruckaufbauventile 19 fließt.

Ein praktisches Ausführungsbeispiel der erfindungsgemäßen Niederdruckpumpe 71 hat als ein erstes drehbares Element ein antreibbares Zahnrad 100 und als ein zweites drehbares Element einen zum Zahnrad 100 exzentrisch gelagerten und dabei das Zahnrad 100 umgebenden und mit ihm kämmenden, sogenannten Innenzahnring 101, weswegen die Pumpe 71 auch den Namen "Innenzahnringpumpe" hat. Wie bereits erwähnt, ist diese Niederdruckpumpe 71 aber auch unter dem Namen "Gerotor-Pumpe" bekannt. Zur Niederdruckpumpe 71 gehören noch ein Gehäuse 102 und ein Gehäusedeckel 103 und eine Antriebswelle 104 für das Zahnrad 100.

Das Zahnrad 100 ist gelagert und antreibbar mittels einer beispielsweise eingepreßten Antriebswelle 104, die an einem zum Motor 70 ausgerichteten Ende 105 eine quer verlaufende nutartige Ausnehmung 106 hat. Eine aus dem Motor 70 herausragende Motorwelle 107 ist zu einem Mitnehmer 108 abgeflacht, wobei der Mitnehmer 108 in die Ausnehmung 106 eintaucht zur Übertragung von Antriebsdrehmomenten. Die Antriebswelle 104 ist in einer im Gehäuse 102 befindlichen Lagerbohrung 109 und einer in den Gehäusedeckel 102 befindlichen Lagerbohrung 110 drehbar gelagert.

Angrenzend an die Lagerbohrung 109 ist im Gehäuse eine Bohrung 111 zu der Lagerbohrung 109 exzentrisch, also achsversetzt, angeordnet. Die Bohrung 111 nimmt den Innenzahnring 101 mit wenig Radialspiel drehbar auf. In axialer Richtung ist die Tiefe der Bohrung 111 begrenzt durch eine gehäusefeste, quer zur Bohrung 110 ausgerichtete Fläche 112. Diese Fläche hat von einer gehäusedeckelseitigen Begrenzungsfläche einen vorgewählten Abstand. An dieser Begrenzungsfläche 113 liegt eine Deckelfläche 114 an. Zwischen der Deckelfläche 114 und der Fläche 112 finden das Zahnrad 100 und der Innenzahnring 101 Platz mit einem später beschriebenen Axialspiel.

Von der Fläche 112 gehen eine erste bogenförmig um die Lagerbohrung 109 gekrümmte Ausnehmung 115 und eine ebenfalls gekrümmte Ausnehmung 116 aus. Beide Ausnehmungen erstrecken sich jeweils über einen Bogen, der weniger als 180° einschließt. Die Ausnehmungen sind im wesentlichen nutartig ausgebildet. Die erste Ausnehmung 115 ist durch eine Anschlußbohrung 117 an den Eingang 72, der sich im Gehäuse 102 befindet, angeschlossen und bildet dieserart einen Ansaugkanal, der zum Zahnrad 100 und zum Innenzahnring 101 mündet. An die zweite Ausnehmung 116 ist durch eine Verbindungsbohrung 118 der Ausgang 73, der sich ebenfalls an dem Gehäuse 102 befindet, angeschlossen, so daß die Ausnehmung 116 einen bei dem Zahnrad 100 und dem Innenzahnring 101 beginnenden Druckkanal bildet. Der Eingang 72 und der Ausgang 73 sind beispielsweise in Form von Gewindeanschlüssen ausgebildet.

Der Gehäusedeckel 103 ist zum Motor 70 hin mit einem rohrartigen Fortsatz 119 versehen, in den ein Zentrieransatz 120 des Motors 70 eingesteckt ist. Wenigstens eine Schraube 121 ist vorgesehen zum Zusammenhalten des Gehäuses 102, des Gehäusedeckels 103 und des Motors 70. Ein Dichtring 122 ist zwischen das Gehäuse 102 und den Gehäusedeckel 103 eingelegt. Ein weiterer Dichtring 123 sorgt für eine Abdichtung zwischen dem Fortsatz 119 und dem Motor 70. Ein zusätzlicher Dichtring 124 umschließt abdichtend die Motorwelle 107. Innerhalb des Fortsatzes 119 und dabei zwischen dem Motor 70 und dem Gehäusedeckel 3 befindet sich ein Hohlraum 125. Dieser ist außerhalb der Projektion der Bohrung 111 durch eine sich durch den Gehäusedeckel 103 erstreckende erste Verbindungsbohrung 126 und eine sich an diese anschließende in das Gehäuse 102 erstreckende zweite Verbindungsbohrung 127 an die Anschlußbohrung 117 und somit den Eingang 72 angeschlossen. Durch die Antriebswelle 104 erstreckt sich eine Druckausgleichsbohrung 128.

Das Zahnrad 100 weist beispielsweise sechs Zähne 129 und der Innenzahnring 101 demgemäß sieben Zahnlücken 130 auf. Die Form der Zähne und der Zahnlücken ist nicht Gegenstand der Erfindung, weil hier auf ein Zahnrad und einen Innenzahnring mit im Handel erhältlicher Geometrie zurückgegriffen wird. Wenn der Motor 70 das Zahnrad 100 antreibt, wird auch der Innenzahnring 101 gedreht. Dabei tauchen im Bereich der Ausnehmung 115 Zähne 129 nacheinanderfolgend aus Zahnlücken 130 aus, und im Bereich der Ausnehmung 116 tauchen Zähne 129 nacheinander in Zahnlücken 130 ein mit der an sich bekannten Folge, daß von der ersten Ausnehmung 115 aus Druckmittel zwischen das Zahnrad 100 und den Innenzahnring 101 einfließt und nachfolgend heraus und in die zweite Ausnehmung 116 gedrückt wird. Demzufolge wird sich bei richtig gewählter Drehrichtung der Antriebswelle 104 am Ausgang 73 ein Druck einstellen, der höher ist als ein Druck am Eingang 72. Anders ausgedrückt: Zwischen der zweiten Ausnehmung 116 und der ersten Ausnehmung 115 wird ein Druckgefälle erzeugt.

Dieses Druckgefälle führt wegen des bereits angesprochenen Axialspiels des Zahnrads 100 zwischen der Fläche 112 und der Deckelfläche 114 und auch des Axialspiels des Innenzahnringes 101 zwischen diesen genannten Flächen 112 und 114 zu Leckageströmungen, also zu wenigstens einer Rückströmung innerhalb der Pumpe 71. Dadurch verursachte Volumenströme sind um so größer, je größer das Druckgefälle, je größer die Axialspiele und je dünnflüssiger das Druckmittel z. B. infolge von Erwärmung beim Pumpbetrieb oder bei sommerlichen Temperaturen ist. Beispielsweise sind beide Axialspiele gleich groß ausgebildet und in der Figur 4 deshalb mit einem gemeinsamen Bezugszeichen 131 bezeichnet. Deshalb sind der Einfachheit halber auch die Axialspiele zwischen dem Zahnrad 100 bzw. dem Innenzahnring 101 und der Fläche 12 gleich groß eingezeichnet, was aber, wie später erläutert wird, nicht unbedingt erforderlich ist. Im zeichnerisch dargestellten Fall ist erkennbar, daß das genannte Druckgefälle in einem durch das Axialspiel 131 und durch die Bohrung 111 einerseits und die Antriebswelle 104 andererseits zwischen der Ausnehmung 116 und der Ausnehmung 115 zwei Querschnitte zur Verfügung stehen, die beide gemeinsam in der Figur 1 als die Drossel 75 charakterisiert sind. Dadurch ist erkennbar, daß das genannte Druckgefälle in dem durch das Axialspiel 131 bestimmten Querschnitt Druckmittel aus dem Bereich der zweiten Ausnehmung 116 um die Antriebswelle herum in den Bereich der ersten Ausnehmung 115 drückt. In der erfindungsgemäßen Weise wird wenigstens eines der genannten Axialspiele größer als bei handelsüblichen Gerotor-Pumpen gewählt zu dem Zweck, daß durch die gegenüber handelsüblichen Gerotor-Pumpen verstärkte Rückströmung die zur Figur 1 bereits beschriebene Druckbegrenzung resultiert, wodurch das zum Stand der Technik gehörende Ladedruckbegrenzungsventil überflüssig ist mit dem Vorteil der Einsparung von Kosten und Gewicht.

Wie bereits erwähnt, wird beispielsweise nur dem Zahnrad 100 das vergrößerte Axialspiel 131 zugeordnet. Dies wird dadurch erreicht, daß man einen handelsüblichen Innenzahnring 101 verwendet und ein zugeordnetes handelsübliches Zahnrad 100 durch Nachbearbeitung verkürzt. Hierfür kann ein beispielsweise aus Stahl gesintertes Zahnrad 100 magnetisch fixiert und stirnseitig geschliffen werden. Bevorzugt wird die Verkürzung des gesinterten Zahnrades 100, weil die Bearbeitung des geringeren Durchmessers dieses Zahnrades 100 billiger ist als die Bearbeitung des größeren Durchmessers des Innenzahnringes 101. Durch diese Nachbearbeitung bzw. durch das erfindungsgemäß gewählte Axialspiel 131 kommt noch der funktionelle Vorteil zustande, daß beim Ansaugen von lufthaltigem Druckmittel oder Luft allein das Angesaugte leicht genug den Weg von der zweiten Ausnehmung 116 zur ersten Ausnehmung 115 in den durch das Axialspiel 131 festgelegten Querschnitten findet. Der Grund hierfür ist, daß infolge der Luftoder Gasblasen das im Axialspiel befindliche Medium weniger Zähigkeit aufweist als gasfreies Druckmittel. Luft- oder Gasblasen oder auch Luft allein bewirken, daß die Pumpe 71 keinen nennenswerten Druck am Ausgang 73 liefert. Beispielsweise ist dadurch das in der Figur 1 dargestellte Rückschlagventil 61 nicht mehr öffenbar mit dem Vorteil, daß zumindest ein ununterbrochenes Hineinfördern von Luft in den Bremskreis I vermieden ist.

Weitere Rückströmkanäle sind vorhanden infolge der Anordnung der Ausgleichsbohrung 128 und der Verbindungsbohrungen 126 und 127 und wegen eines unvermeidlichen Lagerspiels zwischen der Antriebswelle 104 und der Lagerbohrung 109 und wegen eines ebenfalls unvermeidlichen Lagerspiels zwischen der Antriebswelle 104 und der Lagerbohrung 110. Diese Rückströmkanäle werden bei der Auswahl des Axialspieles 131 berücksichtigt. Weitere Rückströmkanäle sind deshalb vorhanden, weil auf dem Weg aus dem Bereich der ersten Ausnehmung 115 zu dem Bereich der zweiten Ausnehmung 116 Zähne 129 aus Zahnlücken 131 des Innenzahnringes 101 austauchen. Im Sinn der Erfindung wird in den vorhandenen Rückströmkanälen vorzugsweise nur das Axialspiel 131 größer als üblich zur Erfüllung der Druckbegrenzung dimensioniert.

Der erfindungsgemäße Gedanke, gezielt wenigstens eine Rückströmung zu erzeugen zur Begrenzung des Drucks der Niederdruckpumpe, ist auch übertragbar auf andere Arten von Zahnradpumpen, die beispielsweise Paare von Stirnzahnrädern oder andere verzahnte und miteinander in Eingriff befindliche Pumpenelemente aufweisen.

Das zweite Ausführungsbeispiel einer erfindungsgemäßen hydraulischen Fahrzeugbremsanlage 2a gemäß der Figur 2 unterscheidet sich von dem Ausführungsbeispiel der Figur 1 lediglich dadurch, daß von den Pumpenaggregaten 57, 58 ausgehende Einspeiseleitungen 60, 63, in die wiederum Rückschlagventile 61, 64 eingebaut sind, nicht in die Hauptbremsleitungen 59, 62 münden, sondern direkt in die Radschlupfregeleinrichtung 11a an Anschlüssen 76 bzw. 77 münden. Diese Anschlüsse 76 und 77 sind mit der jeweiligen Rückförderpumpe 13 bzw. 14 permanent verbunden. Zwischen den Hauptbremsleitungen 59, 60 und den Rückförderpumpen 13, 14 befinden sich wiederum die 2/2-Wegeventile 45 bzw. 48. Somit besteht die Möglichkeit, zum Zwecke des Durchführens von voranstehend beschriebenem automatischen Bremsbetrieb die Pumpenaggregate 57, 58 einzuschalten zum Laden der Rückförderpumpen 13 bzw. 14. Bei einer Ausbildung der Rückförderpumpen 13 und 14 als sich selbst versorgende, also selbstansaugende Rückförderpumpen können die 2/2-Wegeventile 45 und 46 geöffnet werden, so daß die Rückförderpumpen 13 und 14 sich beispielsweise bei ausgefallenen Pumpenaggregaten 57 bzw. 58 selbst durch die Hauptbremsleitung 59 bzw. 60 und den Hauptbremszylinder 3 hindurch aus dem Vorratsbehälter 4 versorgen können. Andererseits eröffnen die 2/2-Wegeventile 45 und 46 auch die Möglichkeit, daß die Pumpenaggregate 57 und 58 Druckmittel in die Hauptbremsleitungen 59 und 60 fördern, so daß in den Hauptbremsleitungen 59 und 60 infolge von im Hauptbremszylinder 3 vorhandenen Strömungswiderständen Druck entsteht, der in den Radbremsen 7 bis 10 zum Anlegen von Bremsbacken nutzbar ist.

Welche der beiden hydraulischen Fahrzeugbremsanlagen 2 bzw. 2a in ein Kraftfahrzeug eingebaut wird, kann beispielsweise davon abhängen, wo innerhalb des Fahrzeugs Einbauraum zur Verfügung steht einerseits für die Unterbringung der Radschlupfregeleinrichtung 11 bzw. 11a und andererseits für das wenigstens eine Pumpenaggregat 57 bzw. 58. Dementsprechend wird man überlegen, ob die für die hydraulische Fahrzeugbremsanlage 2 benötigte Verlegung der Saugleitungen 65, 66 bzw. 65a, 66a und der Einspeiseleitungen 60, 63 bzw. 60a, 63a den geringeren Aufwand verursacht.

Das dritte Ausführungsbeispiel der hydraulischen Fahrzeugbremsanlage 26 gemäß der Figur 3 unterscheidet sich vom Ausführungsbeispiel der Fahrzeugbremsanlage 2 gemäß der Figur 1 dadurch, daß das Pumpenaggregat 58 wie angedeutet dem Vorratsbehälter 4 und dem Hauptbremszylinder 3 hydraulisch zwischengeordnet ist und dabei dem Bremskreis II, der die Hauptbremsleitung 62 aufweist, zugeordnet ist. Beispielsweise ist hierfür das Pumpenaggregat 58 zwischen den Vorratsbehälter 4 und den Hauptbremszylinder 3 eingebaut. Diese Anordnung des Pumpenaggregates 58 zwischen dem Vorratsbehälter 4 und dem Hauptbremszylinder 3 hat den Vorteil, daß alles von dem Pumpenaggregat 58 durch deren Ausgang förderbare Druckmittel den Weg in die Hauptbremsleitung 62 findet und deshalb zum Anlegen von Bremsbelägen der Radbremsen 9 und 10 und zum Versorgen der Rückförderpumpe 14 zur Verfügung steht. Demgemäß kann die Förderleistung des Pumpenaggregates 58 kleiner gewählt werden als für die hydraulischen Fahrzeugbremsanlagen 2 und 2a gemäß den Figuren 1 und 2.

In der Fahrzeugbremsanlage 2b sind die angesprochenen Radbremsen 9 und 10 beispielsweise antreibbaren Vorderrädern zugeordnet, so daß das Pumpenaggregat 58 zum schnellen Beseitigen von Durchdrehgefahr an wenigstens einem Vorderrad hilft. Das Pumpenaggregat 58 erfüllt aber analog dem Voranstehenden die Aufgabe, zusammen mit der Rückförderpumpe 14 frühe und schnelle Bremsdruckanstiege in wenigstens einer der Radbremsen 9 bzw. 10 zu erreichen, wenn einer Schleudergefahr durch wegdriftende Hinterräder entgegenzuwirken ist oder wenn das Lenken des Fahrzeugs unterstützende Giermomente zu erzeugen sind.

In Analogie zu den beiden hydraulischen Bremsanlagen 2 und 2a der Figuren 1 und 2 kann auch die Fahrzeugbremsanlage 2b gemäß der Figur 3 ein nicht dargestelltes zweites Pumpenaggregat aufweisen, dessen Leistung dem Bremskreis I zur Verfügung steht. Dadurch können dann auch mittels der Radbremsen 7 und 8 schnell die benötigten Bremskräfte automatisch erzeugt werden.

Erkennbar ist, daß das erfindungsgemäße Pumpenaggregat, das ohne ein teures Druckbegrenzungsventil gemäß dem Stand der Technik auskommt, kombinierbar ist mit Radschlupfregeleinrichtungen, die in unterschiedlicher Weise zum automatischen Bremsen ausgebildet sind.

## Patentansprüche

1. Hydraulische Fahrzeugbremsanlage mit einer Radschlupfregeleinrichtung (11) gegen Radblockiergefahr beim Bremsen und zum automatischen Bremsen, wobei die Radschlupfregeleinrichtung (11) zwischen einem Hauptbremszylinder (3) und wenigstens einer Radbremse (7-10) angeordnet ist und wenigstens eine Hochdruckpumpe (13, 14) und wenigstens eine Bremsdruckmodulationsventilanordnung (15 - 18) und zur Versorgung der wenigstens einen Hochdruckpumpe (13,14) mit Druckmittel im automatischen Bremsbetrieb ein an einen Vorratsbehälter (4) angeschlossenes Pumpenaggregat (57,58) mit einer verzahnte Elemente aufweisenden Niederdruckpumpe (71) und eine diese antreibenden Motor (70) aufweist, dadurch gekennzeichnet, daß die Niederdruckpumpe (71) ein Gehäuse (102), einen Eingang (72) und einen Ausgang (73) besitzt, und daß innerhalb des Gehäuses (102, 103) wenigstens ein den Ausgang (73) mit dem Eingang (72) verbindender Rückströmkanal (74) vorhanden ist, dessen Querschnitt zur Funktion als wenigstens eine Drossel (75) so bemessen ist, daß bei verhindertem Ausfluß von Druckmittel aus dem Ausgang (73) der Niederdruckpumpe (71) und bei vorgegebener Viskosität des Druckmittels sowie einer vorgegebenen Antriebsdrehzahl der Niederdruckpumpe (71) durch einen von der wenigstens einen Drossel (75) bestimmten Druckmittelstrom eine Druckbegrenzung auf einen gewollten Wert stattfindet.

2. Hydraulische Fahrzeugbremsanlage nach Anspruch 1, dadurch gekennzeichnet, daß die Niederdruckpumpe (71) drehbare Pumpenelemente (100, 101) mit Zähnen (129) und Zahnlücken (130) aufweist, daß stirnseitig zu den Pumpenelementen (100, 101) eine im Gehäuse (102) befindliche Fläche (112) ausgerichtet ist mit einer mit dem Eingang (72) verbundenen ersten saugseitigen Ausnehmung (115) und mit einer mit dem Ausgang (73) verbundenen druckseitigen Ausnehmung (116), und daß der wenigstens eine Rückströmkanal (74) ausgeht von der zweiten druckseitigen Ausnehmung (116) hin zur ersten saugseitigen Ausnehmung (115), wobei der wenigstens eine Rückströmkanal (74) eine Drossel (75) bildet durch Auswahl der Größe eines Axialspieles (131) zwischen der Fläche (112) und wenigstens einem der antreibbaren Pumpenelemente (100, 101).

3. Hydraulische Fahrzeugbremsanlage nach Anspruch 2, dadurch gekennzeichnet, daß ein erstes Pumpenelement als ein Zahnrad (100) ausgebildet ist, und daß ein zweites Pumpenelement als ein Innenzahnring (101) ausgebildet ist mit einer Anzahl von Zahnlücken (130), die um den Wert 1 größer ist als die Anzahl der Zähne (129) des Zahnrades (100), wobei der wenigstens eine Rückströmkanal (74) wenigstens entlang einem der beiden Pumpenelemente (100, 101) verläuft.

4. Hydraulische Fahrzeugbremsanlage nach einem der Ansprüche 1 bis 3, dadurch gekennzeichnet, daß dem Gehäuse (102) ein Gehäusedeckel (103) zugeordnet ist, der einen gegen den Motor (70) gerichteten Fortsatz (119) hat.

5. Hydraulische Fahrzeugbremsanlage nach einem der Ansprüche 1 bis 4, dadurch gekennzeichnet, daß der Hauptbremszylinder (3) zweikreisig für zwei Bremskreise (I, II) ausgebildet ist und einen Vorratsbehälter (4) hat, daß die Radschlupfregeleinrichtung (11, 11a) zweikreisig ausgebildet ist und je Bremskreis (I, II) eine Hochdruckpumpe aufweist, die für den Betrieb im Radblockierschutzbetrieb beim Bremsen als eine wenigstens an eine Bremsdruckmodulationsventilanordnung angeschlossene und zum Hauptbremszylinder fördernde Rückförderpumpe (13, 14) einschaltbar ist, daß für den automatischen Bremsbetrieb unter Verwendung wenigstens einer der Bremsdruckmodulationsventilanordnungen (15, 16, 17, 18) wenigstens für einen Bremskreis (I oder II) ein Pumpenaggregat (57, 58) mit der Niederdruckpumpe (71) vorgesehen ist, deren Eingang (72) mittels einer Saugleitung (65, 66, 65a, 66a) an den Vorratsbehälter (4) angeschlossen ist und deren Ausgang (73) durch eine Einspeiseleitung (60, 63, 60a, 63a) und ein in diese eingebautes Rückschlagventil (61, 64) die Hochdruckpumpe (13, 14) im automatischen Bremsbetrieb versorgt.

6. Hydraulische Fahrzeugbremsanlage nach Anspruch 5, dadurch gekennzeichnet, daß die Einspeiseleitung (60, 63) an eine zwischen dem Hauptbremszylinder (3) und der Radschlupfregeleinrichtung (11) verlaufende Hauptbremsleitung (59, 62) angeschlossen ist, daß zwischen dieser Hauptbremsleitung (59, 62) und der Hochdruckpumpe (13, 14 ) innerhalb der Radschlupfregeleinrichtung (11) ein 2/2-Wegeventil (45, 46) angeordnet ist, das normal geschlossen ist und für den automatischen Bremsbetrieb öffenbar ist.

7. Hydraulische Fahrzeugbremsanlage nach Anspruch 5, dadurch gekennzeichnet, daß die Radschlupfregeleinrichtung (11a) an die Einspeiseleitung (60a, 63a) angeschlossen ist und daß zwischen der Einspeiseleitung (60a, 63a) und einer von dem Hauptbremszylinder (3) ausgehenden und zu der Radschlupfregeleinrichtung (11a) verlaufenden Hauptbremsleitung (59, 60) innerhalb der Radschlupfregeleinrichtung (11a) ein 2/2-Wegeventil (45, 46) angeordnet ist, das normalerweise geschlossen und für den automatischen Bremsbetrieb öffenbar ist.

8. Hydraulische Fahrzeugbremsanlage nach einem der Ansprüche 1 bis 4, dadurch gekennzeichnet, daß der Bremszylinder (3) zweikreisig ausgebildet ist und einen Vorratsbehälter (4) aufweist, daß die Radschlupfregeleinrichtung (11) zweikreisig ausgebildet ist und je Bremskreis (I, II) eine Hochdruckpumpe (13, 14) aufweist, die für den Betrieb des Vermeidens von Radblockiergefahr beim Bremsen als eine an wenigstens eine Bremsdruckmodulationsventilanordnung (15, 16, 17, 18) angeschlossene Rückförderpumpe einschaltbar ist, daß für den automatischen Bremsbetrieb unter Verwendung wenigstens einer der Bremsdruckmodulationsventilanordnungen (15, 16, 17, 18) wenigstens für einen Bremskreis (I oder II) ein Pumpenaggregat (57, 58) mit der Niederdruckpumpe (71) vorgesehen ist, wobei die Niederdruckpumpe (71) dem Vorratsbehälter (4) und dem Hauptbremszylinder (3) zwischengeordnet ist, wobei der saugseitige Eingang (72) an den Vorratsbehälter (4) und der druckseitige Ausgang (73) mit dem Hauptbremszylinder (3) verbunden ist.

## Claims

1. Hydraulic vehicle brake system with a wheel slip control device (11) against the risk of wheel locking during braking and for automatic braking, the wheel slip control device (11) being arranged between a brake master cylinder (3) and at least one wheel brake (7-10) and having at least one high-pressure pump (13, 14) and at least one brake-pressure modulating valve arrangement (15-18) and, for supplying the at least one high-pressure pump (13, 14) with pressure medium in the automatic braking mode, a pump assembly (57, 58) connected to a reservoir (4), with a low-pressure pump (71) having toothed elements, and a motor (70) driving the said low-pressure pump, characterized in that the low-pressure pump (71) possesses a casing (102), an inlet (72) and an outlet (73), and in that, within the casing (102, 103), there is at least one backflow duct (74) which connects the outlet (73) to the inlet (72) and the cross section of which is dimensioned, so as to function as at least one throttle (75), in such a way that, when the outflow of pressure medium from the outlet (73) of the low-pressure pump (71) is prevented and with a predetermined viscosity of the pressure medium and also at a predetermined driving rotational speed of the low-pressure pump (71), pressure limitation to a desired value takes place as a result of a pressure-medium stream defined by the at least one throttle (75).

2. Hydraulic vehicle brake system according to Claim 1, characterized in that the low-pressure pump (71) has rotatable pump elements (100, 101) with teeth (129) and tooth spaces (130), in that a surface (112) located in the casing (102) is aligned on the end face with the pump elements (100, 101), with a first suction-side recess (115) connected to the inlet (72) and with a delivery-side recess (116) connected to the outlet (73), and in that the at least one backflow duct (74) extends from the second delivery-side recess (116) towards the first suction-side recess (115), the at least one backflow duct (74) forming a throttle (75) by the selection of the size of an axial clearance (131) between the surface (112) and at least one of the drivable pump elements (100, 101).

3. Hydraulic vehicle brake system according to Claim 2, characterized in that a first pump element is designed as a gearwheel (100), and in that a second pump element is designed as an internally toothed ring (101), with a number of tooth spaces (130) which is greater by the value 1 than the number of teeth (129) of the toothed wheel (100), the at least one backflow duct (74) running at least along one of the two pump elements (100, 101).

4. Hydraulic vehicle brake system according to one of Claims 1 to 3, characterized in that the casing (102) is assigned a casing cover (103) which has an extension (119) directed towards the motor (70).

5. Hydraulic vehicle brake system according to one of Claims 1 to 4, characterized in that the brake master cylinder (3) is of dual-circuit design for two brake circuits (I, II) and has a reservoir (4), in that the wheel slip control device (11, 11a) is of dual-circuit design and for each brake circuit (I, II) has a high-pressure pump which, for operating in the wheel anti-lock mode during braking, can be cut in as a return pump (13, 14) connected at least to a brake-pressure modulating valve arrangement and conveying to the brake master cylinder, and in that for the automatic braking mode, using at least one of the brake-pressure modulating valve arrangements (15, 16, 17, 18), a pump assembly (57, 58) with the low-pressure pump (71)is provided, at least for one brake circuit (I or II), the inlet (72) of which is connected to the reservoir (4) by means of a suction line (65, 66, 65a, 66a) and the outlet (73) of which supplies the high-pressure pump (13, 14) in the automatic braking mode by means of a feed line (60, 63, 60a, 63a) and a non-return valve (61, 64) incorporated into the latter.

6. Hydraulic vehicle brake system according to Claim 5, characterized in that the feed line (60, 63) is connected to a main brake line (59, 62) running between the brake master cylinder (3) and the wheel slip control device (11), and in that between this main brake line (59, 62) and the high-pressure pump (13, 14) there is arranged, within the wheel slip control device (11), a 2/2-way valve (45, 46) which is normally closed and which can be opened for the automatic braking mode.

7. Hydraulic vehicle brake system according to Claim 5, characterized in that the wheel slip control device (11a) is connected to the feed line (60a, 63a), and in that between the feed line (60a, 63a) and a main brake line (59, 60) emanating from the brake master cylinder (3) and running to the wheel slip control device (11a) there is arranged, within the wheel slip control device (11a), a 2/2-way valve (45, 46) which is normally closed and which can be opened for the automatic braking mode.

8. Hydraulic vehicle brake system according to one of Claims 1 to 4, characterized in that the brake cylinder (3) is of dual-circuit design and has a reservoir (4), in that the wheel slip control device (11) is of dual-circuit design and for each brake circuit (I, II) has a high-pressure pump (13, 14) which, for operating to avoid the risk of wheel locking during braking, can be cut in as a return pump connected to at least one brake-pressure modulating valve arrangement (15, 16, 17, 18), and in that for the automatic braking mode, using at least one of the brake-pressure modulating valve arrangements (15, 16, 17, 18), a pump assembly (57, 58) with the low-pressure pump (71) is provided at least for one brake circuit (I or II), the low-pressure pump (71) being interposed between the reservoir (4) and the brake master cylinder (3), the suction-side inlet (72) being connected to the reservoir (4) and the delivery-side outlet (73) being connected to the brake master cylinder (3).

## Revendications

1. Installation de freinage hydraulique de véhicule comprenant
une installation anti-patinage (11) pour le risque de blocage des roues au freinage et pour freiner automatiquement, l'installation anti-patinage (11) étant montée entre un maître-cylindre de frein (3) et au moins un frein de roue (7, 10), et au moins une pompe haute pression (13, 14) ainsi qu'au moins un dispositif de soupape de modulation de pression de frein (15-18), et pour alimenter la pompe haute pression (13, 14) en liquide hydraulique en mode de freinage automatique, un module de pompe (57, 58) relié au réservoir (4), comportant une pompe basse pression (71) avec des éléments dentés et un moteur (70) entraînant la pompe, caractérisée en ce que
• la pompe basse pression (71) comprend un boîtier (102), une entrée (72) et une sortie (73), et
• à l'intérieur du boîtier (102, 103) au moins un canal de retour (74) relie la sortie (73) à l'entrée (72) pour fonctionner comme au moins un organe d'étranglement (75), la section de ce canal étant dimensionnée pour éviter la sortie de liquide hydraulique de la sortie (73) de la pompe basse pression (71) et pour que, pour une viscosité donnée du liquide hydraulique et une vitesse de rotation prédéfinie de la pompe basse pression (71), on réalise une limitation de pression à une valeur voulue par un courant de liquide hydraulique défini au moins par l'organe d'étranglement (75).

2. Installation de freinage hydraulique de véhicule selon la revendication 1,
caractérisée en ce que
• la pompe basse pression (71) comporte des éléments de pompe rotatifs (100, 101) ayant des dents (129) et des intervalles de dents (130),
• sur la face frontale des éléments de pompe (100, 101), il y a une surface (112) dans le boîtier (102), avec une première cavité (115) du côté de l'aspiration, reliée à l'entrée (72), et une cavité (116) du côté de la pression, reliée à la sortie (73) et
• au moins un canal de retour (74) partant de la seconde cavité (116) du côté de la pression rejoint la première cavité (115) du côté de l'aspiration,
• ce canal de retour (74) formant un organe d'étranglement (75) par le choix de la taille du jeu axial (131) entre la surface (112) et au moins l'un des éléments de pompe entraînés (100, 101).

3. Installation de freinage hydraulique de véhicule selon la revendication 2,
caractérisée en ce qu'
un premier élément de pompe est en forme de roue dentée (100) et un second élément de pompe est en forme de couronne à denture intérieure (101), avec un nombre d'intervalles de dents (130) augmenté d'une unité par rapport au nombre (129) de dents (100), au moins un canal de retour (74) passant le long de l'un des éléments de pompe (100, 101).

4. Installation de freinage hydraulique de véhicule selon l'une des revendications 1 à 3,
caractérisée par
un couvercle (103) associé au boîtier (102), ce couvercle ayant un prolongement (119) dirigé vers le moteur (70).

5. Installation de freinage hydraulique de véhicule selon l'une des revendications 1 à 4,
caractérisée en ce que
le maître-cylindre de frein (3) est réalisé à deux circuits pour deux circuits de frein (I, II) et possède un réservoir d'alimentation (4),
l'installation anti-patinage (11, 11a) est à deux circuits et, pour chaque circuit de frein (I, II), comporte une pompe haute pression mise en oeuvre pour le fonctionnement en mode anti-blocage, au freinage, branchée comme au moins une pompe de refoulement (13, 14) raccordée au dispositif de soupape de modulation de pression de frein et débitant vers le maître-cylindre,
pour le mode de freinage automatique, en utilisant au moins l'un des dispositifs de soupape de modulation de pression de frein (15, 16, 17, 18), il est prévu au moins pour un circuit de frein (I ou II), un module de pompe (57, 58) avec la pompe basse pression (71) dont l'entrée (72) est reliée par une conduite d'aspiration (65, 66, 65a, 66a) au réservoir d'alimentation (4) et dont la sortie (73) alimente par un conduit d'alimentation (60, 63, 60a, 63a) et un clapet anti-retour (61, 64) monté dans celui-ci, la pompe haute pression (13, 14) en mode de freinage automatique.

6. Installation de freinage hydraulique de véhicule selon la revendication 5,
caractérisée en ce que
• la conduite d'alimentation (60, 63) est reliée à un conduit principal de frein (59, 62) reliant le maître-cylindre de frein (3) et l'installation anti-patinage (11),
• entre ce conduit principal (59, 62) et la pompe haute pression (13, 14), à l'intérieur de l'installation anti-patinage (11) on a un distributeur à 2/2 voies (45, 46) normalement fermé et qui peut être ouvert pour le mode de freinage automatique.

7. Installation de freinage hydraulique de véhicule selon la revendication 5,
caractérisée en ce que
l'installation anti-patinage (11a) est reliée au conduit d'alimentation (60a, 63a) et
entre le conduit d'alimentation (60a, 63a) et un conduit principal de frein (59, 60) partant du maître-cylindre (3) et relié à l'installation anti-patinage (11a), à l'intérieur de cette installation (11a), on a un distributeur à tiroir à 2/2 voies (45, 46) normalement fermé mais qui s'ouvre pour le mode de freinage automatique.

8. Installation de freinage hydraulique de véhicule selon l'une des revendications 1 à 4,
caractérisée en ce que
• le maître-cylindre (3) est à deux circuits et comporte un réservoir d'alimentation (4),
• l'installation anti-patinage (11) est à deux circuits et pour chaque circuit de frein (I, II), comporte une pompe haute pression (13, 14) qui peut être mise en oeuvre comme pompe de refoulement pour éviter, en fonctionnement, le risque de blocage de roues au freinage, cette pompe étant reliée à au moins un dispositif de soupape de régulation de pression de frein (15, 16, 17, 18),
• pour le mode de freinage automatique, en utilisant au moins l'un des dispositifs de soupape à modulation de pression de frein (15, 16, 17, 18), pour au moins un circuit de frein (I ou II), il est prévu un module de pompe (57, 58) avec la pompe basse pression (71),
• la pompe basse pression (71) étant montée entre le réservoir (4) et le maître-cylindre (3),
• l'entrée (72) du côté d'aspiration étant reliée au réservoir (4) et la sortie (73) du côté de la pression étant reliée au maître-cylindre (3).
